(19) Europäisches Patentamt
European Patent Office
Office européen des brevets

(11) Veröffentlichungsnummer: **0 148 398**
**A2**

# (12) EUROPÄISCHE PATENTANMELDUNG

(21) Anmeldenummer: **84114494.2**

(22) Anmeldetag: **29.11.84**

(51) Int. Cl.⁴: **C 07 F 7/18**, C 08 L 57/00, C 09 J 3/14

(30) Priorität: **24.12.83 DE 3346909**

(43) Veröffentlichungstag der Anmeldung: **17.07.85 Patentblatt 85/29**

(84) Benannte Vertragsstaaten: **AT BE CH DE FR GB IT LI LU NL SE**

(71) Anmelder: **DYNAMIT NOBEL AKTIENGESELLSCHAFT, Postfach 1261, D-5210 Troisdorf, Bez. Köln (DE)**

(72) Erfinder: **Hänsel, Edward, Dr., Schlickumerweg 23, D-4006 Hochdahl (DE)**
Erfinder: **Huber, Hans, Dr., Adenauer Strasse 32, D-5210 Troisdorf (DE)**
Erfinder: **Geier, Gerhard, Bussardweg 1, D-5204 Lohmar-Geber (DE)**
Erfinder: **Seiler, Claus, Dr., In der Klus 10, D-7888 Rheinfelden (DE)**

## (54) Neue Alkenylbenzoyloxysilane und ihre Verwendung in Haftklebern.

(57) Vorliegende Erfindung behandelt neue Alkenylacyloxysilane, bei der sich die Acyloxygruppierung von der Benzoesäure ableitet. Weiterhin behandelt die vorliegende Erfindung den Einsatz dieser neuen Alkenylacyloxysilane zur Herstellung von Haftklebern, die durch Copolymerisation dieser neuen Verbindungen mit mindestens zwei weiteren ethylenisch ungesättigten Verbindungen hergestellt werden. Die Vernetzung dieser neuen Haftkleber erfolgt vorzugsweise mit Hilfe an sich bekannter Vernetzungskatalysatoren und/oder durch energiereiche Strahlen.

EP 0 148 398 A2

0148398



Troisdorf, den 19.12.1983
OZ:83079 (4282) Dr.Sk/Ce

DYNAMIT NOBEL AKTIENGESELLSCHAFT
Troisdorf, Bez. Köln

# Neue Alkenylbenzoyloxysilane und ihre Verwendung in Haftklebern

Gegenstand der vorliegenden Erfindung sind neue Alkenylacyloxysilane, Verfahren zu ihrer Herstellung und ihre Verwendung in Haftklebern.

Es ist bekannt, Vinylalkoxysilane als Comonomeres bei der Herstellung von Copolymeren aus ethylenisch ungesättigten Monomeren einzusetzen. Es sind weiterhin Haftkleber bekannt die durch Copolymerisation von N-Vinyllactamen und Acrylsäureestern hergestellt werden (DE-PS 19 64 743). Die Vernetzung erfolgt bei diesen Haftklebern entweder als Strahlenvernetzung oder mit Hilfe von organischen Peroxiden.

Aus der US-PS 39 71 751 sind weiterhin Klebstoffe aus Polyether mit endständigen Silylethergruppen bekannt. Bei ihrer Vernetzung hydrolysieren die an den Silylendgruppen befindlichen hydrolysierbaren Gruppen (z.B. Alkoxygruppen)

unter Bildung einer Si-O-Si-Bindung.

Es ist auch bereits vorgeschlagen worden, die Hydrolysierbarkeit von Alkoxysilylgruppen zur Vernetzung bei Haftklebern auf Basis von Copolymeren mit ethylenisch ungesättigten Gruppen zu verwenden (deutsche Patentanmeldung P 32 32 923.7), doch werden dabei als Comonomere nur Vinylalkoxysilane eingesetzt, deren Alkoxygruppen oft nur sehr langsam in den Copolymeren hydrolysieren. Auch bei den oben genannten Klebstoffen mit Silyletherendgruppen dauert die Hydrolyse aufgrund der Alkoxyendgruppen relativ lange, so daß Haftklebersysteme, die durch Hydrolyse von Alkoxysilylendgruppen vernetzen, Nachteile aufgrund der nur langsam ablaufenden Hydrolyse mit sich bringen.

Es bestand deshalb die Aufgabe, lösungsmittelfreie Haftklebersysteme aufzufinden, die auf Copolymerisaten ethylenisch ungesättigter Verbindungen basieren, relativ schnell vernetzen und physiologisch unbedenkliche und nicht korrosive Hydrolyseprodukte abspalten.

In Erfüllung dieser Aufgabe wurdennun Alkenylacyloxysilane der Formel

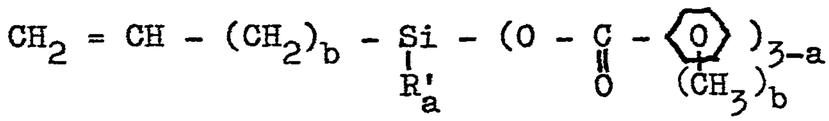

gefunden, in der R' für gleiche oder ungleiche Reste aus der Gruppe $C_{1-4}$-Alkyl und $C_{1-4}$-Alkoxy stehen kann, a gleich 0 oder 1 oder 2 und b gleich 0 oder 1 sein können, die sich als Comonomere in Haftkleber auf Basis von Copolymeren mindestens zweier ethylenisch ungesättigter Verbindungen verwenden lassen.

Es sind zwar schon olefinisch ungesättigte hydrolysierbare Silane mit Acylfunktionen bekannt; bei diesen Silanen leitet sich die Acylfunktion jedoch von aliphatischen Carbonsäuren ab. Bei ihrer Hydrolyse spaltet sich Essigsäure ab, die den Nachteil hat, daß sie gegebenenfalls korrosiv wirkt und physiologisch nicht unbedenkliche Eigenschaften besitzt. Acylreste höherer aliphatischer Carbonsäuren ergeben bei ihrer Hydrolyse Spaltprodukte mit intensivem unangenehmen Geruch, so daß Verbindungen mit diesen Resten für den gewünschten Einsatzzweck ungeeignet sind.

Die Herstellung der neuen Verbindungen kann auf an sich bekannte Weise durch Umsetzung von Alkenylhalogensilanen mit Benzoesäure erfolgen. Die als Ausgangsprodukte einsetzbaren Alkenylhalogensilane können am Si-Atom durch einen oder zwei Alkylreste substituiert sein, wobei diese Reste bis zu 4 C-Atome besitzen können. Als bevorzugte Halogenverbindung wird die Chlorverbindung eingesetzt.

Je nach Wahl des Ausgangsproduktes sind auf diese Weise erhältlich: Vinyl-tri-benzoyloxysilan, Allyl-tris-benzoyloxysilan, Vinylmethyldibenzoyloxysilan, Vinylethyldibenzoyloxysilan, Vinyldimethylbenzoyloxysilan, Allylmethyldibenzoyloxysilan, Allyldimethylbenzoyloxysilan, Vinylbutyldibenzoyloxysilan sowie die entsprechenden, im Benzolkern durch eine Methylgruppe substituierten Verbindungen.

Die neuen Verbindungen lassen sich aber auch aus Alkenylalkoxysilanen durch Umsetzung mit Benzoesäureanhydrid herstellen. Pro abzuspaltende Alkoxygruppe wird dabei 1 Mol Benzoesäureanhydrid eingesetzt. Wenn nur eine Alkoxygruppe abgespalten werden soll, wird zweckmäßigerweise das Vinylsilan im Überschuß eingesetzt. Die Reaktion findet bei erhöhter Temperatur statt, im allgemeinen zwischen 120 und 150 °C, je nach eingesetztem Vinylsilan. Nach erfolgter Umsetzung wird der entstehende Benzoesäureester sowie gegebenenfalls überschüssiges Alkenylalkoxysilan abdestilliert und daraufhin das gewünschte Acyloxysilan durch fraktionierte Destillation gewonnen.

Auf diese Weise lassen sich insbesondere solche Alkenylsilane herstellen, die sowohl Acyloxy- als auch Alkoxygruppen enthalten, wie z.B. Vinylbenzoyloxydimethoxysilan, Vinyldibenzoyloxymethoxysilan oder Vinylbenzoyloxydiethoxysilan.

Mit den neuen Alkenylacyloxysilanen lassen sich neue Copolymere herstellen, die als Haftkleber einsetzbar sind. Als weitere monomere Bestandteile dieser Copolymeren eignen sich olefinisch ungesättigte Verbindungen wie Vinylester höherer Fettsäuren, Vinyllactame und Acryl- oder Methacrylsäureester. Die Esterkomponente der Acrylsäureester kann 4 bis 24 C-Atome besitzen, vorzugsweise enthält sie jedoch 4 bis 12 C-Atome. Als höhere Fettsäuren der Vinylesterkomponente kommen solche mit 12 oder mehr C-Atome in Frage, wie z.B. Vinyllaurat.

Die olefinisch ungesättigten Monomeren werden in den neuen Copolymeren vorzugsweise als Gemische eingesetzt, wobei der Anteil der Acryl- und Methacrylsäureester 50 bis 80 Gew.-%, derjenige der Vinyllactame oder von N-Vinylmethylacetamid 5 bis 30 Gew.-% und derjenige von Styrol 5 bis 25 Gew.-% betragen kann. Die neuen Alkenylacyloxysilane sind in den neuen Copolymerisaten in Anteilen zwischen 0,2 bis 7,5, vorzugsweise zwischen 0,5 und 2,5 Gew.-% enthalten.
Die Herstellung von solchen neuen Copolymeren erfolgt auf an sich bekannte Weise durch radikalische Polymerisation der genannten Monomeren. Die Molgewichte der dabei erhaltenen Copolymeren sollen zwischen 10000 und 300 000, vorzugsweise zwischen 50 000 und 100 000 liegen. Wenn Molgewichte unter 100 000 gewünscht werden, können dem Ansatz auch Polymerisationsregler, wie z.B. aliphatische Mercaptane, hinzugefügt werden.

Geeignete Polymerisationsinitiatoren sind beispielsweise organische Peroxide wie Benzoylperoxid oder Cumolperoxid, Azoverbindungen wie Azo-bis-isobutyronitril, Azo-bisvaleronitril oder auch Ammoniumperoxid. Die Initiatormenge liegt bei 0,05 bis 0,9 Gew.-%, bezogen auf den Feststoffgehalt der Copolymeren.

Die Polymerisation kann sowohl mit als auch ohne Lösungsmittel durchgeführt werden. Ersteres wird besonders dann bevorzugt, wenn Produkte mit niedrigem Molekulargewicht erhalten werden sollen, die dann sofort als Haftkleber, gegebenenfalls nach Untermischen eines Vernetzungskatalysators, auf das Substrat aufgebracht werden können.

Wenn die Polymerisation als Lösungsmittelpolymerisation durchgeführt werden soll, werden als Lösungsmittel bevorzugt solche Verbindungen eingesetzt, die die Monomeren und besonders die Polymeren aufzulösen vermögen. Solche Lösungsmittel sind dem Fachmann an sich bekannt. Als Beispiele seien Essigsäurealkylester und aromatische, bei Raumtemperatur flüssige Kohlenwasserstoffe, sowie Dioxan oder Methylisobutylketon genannt.

Nach erfolgter Copolymerisation wird eventuell verwendetes Lösungsmittel weitgehend abdestilliert, die dann erhaltenen Copolymeren sind bei Lagerung unter Feuchtigkeitsausschluß bei Raumtemperatur lagerstabil. Temperaturen über 40 °C über einen Zeitraum von mehreren Stunden sollten bei der Lagerung möglichst vermieden werden.

Die neuen Copolymeren vernetzen bei Raumtemperatur mit Luftfeuchtigkeit bereits ohne Zusätze von Beschleunigern mit ausreichender Geschwindigkeit. Es ist jedoch auch möglich, die Vernetzungsgeschwindigkeit mit Hilfe an sich bekannter Vernetzungskatalysatoren zu beschleunigen. Diese werden in Mengen zwischen 0,03 und 2,0, vorzugsweise zwischen 0,1 und 1,0 Gew.-%, bezogen auf den Haftkleber, eingesetzt. Die Zugabe erfolgt vorzugsweise vor dem Auftrag des Haftklebers auf das Substrat.

Als Vernetzungskatalysatoren eignen sich beispielsweise organische Zinnverbindungen wie Dioctylzinndiacetat, Dibutylzinndilaurat, Dibutylzinnmaleat, organische Sulfonsäuren wie p-Toluolsulfonsäure, Dodecylbenzolsulfonsäure oder wässrige Lösungen (ca. 50 bis 65 %ig) hypophosphoriger Säure.

Der unvernetzte Haftkleber wird in dünner Schicht, gegebenenfalls bei leicht erhöhter Temperatur, in der Regel unter 80 $^{o}C$ auf das Trägermaterial aufgebracht, wobei die Schichtdicken zwischen 10 und 80, vorzugsweise zwischen 15 und 50 Mikron eingestellt werden können.

Zur weiteren Beschleunigung der Vernetzung kann der unvernetzte Haftkleber unmittelbar nach dem Auftrag mit Infrarotstrahlung von 2 bis 5 $\mu m$ Wellenlänge bestrahlt werden. Je nach Rezeptur variiert die Strahlungsdauer zwischen 12 und 120 sec.

Beispiel 1

Herstellung von Vinyl-tribenzoyloxysilan

Ein 6-Liter-Dreihalskolben wird in eine Pilzheizhaube eingesetzt und mit einem Rührer, einem Rückflußkühler und einem Tropftrichter, dessen Kückenbohrung 1 cm beträgt, ausgestattet.

In den Kolben werden 808 g (5 Mol) Vinyltrichlorsilan und

1000 ml Hexan vorgelegt. Der Ausgang des Rückflußkühlers wird mit Stickstoff abgedeckt. Nach Aufheizen der Flüssigkeit bis zum Eintritt intensiven Rückflusses am Kühler werden in 30 g Partien 1855 g (15,2 Mol) Benzoesäure zugegeben. Die Zugabe ist nach ca. 20 Stunden beendet. Unter Rückflußkochen und intensivem Rühren wird so lange nachreagieren gelassen, bis die analytisch erfaßten Gehalte an hydrolysierbarem Chlor weniger als 100 ppm betragen.

Das so erhaltene Rohprodukt wird in eine Destillationsapparatur überführt. Das Lösungsmittel wird anfangs bei Normaldruck, ab Erreichen einer Sumpftemperatur von 120 °C unter Anwendung von Vakuum entfernt. Nach Abnahme eines Zwischenlaufes werden bei 0,5 mbar und einer Kopftemperatur von 141 °C 1651 g (3,95 Mol) einer Flüssigkeit abdestilliert, die allmählich in einen ölig-kristallinen Zustand übergeht. Die Ausbeute beträgt 79 %.

Die Elementaranalyse des Produktes stellt sich wie folgt dar:

| | C | H | Si | Molgewicht |
|---|---|---|---|---|
| berechnet: | 66 % | 4,3 % | 6,7 % | 418 |
| gefunden: | 66,3 % | 4,2 % | 6,9 % | 420 |
| Siedepunkt: | 141 °C/0,5 mbar | | | |
| Fp: | 35 °C | | | |
| $d_{25}^{25}$: | 1,18 $g/cm^3$ | | | |

Beispiel 2

Herstellung von Vinylmethyldibenzoyloxysilan

In die Apparatur des Beispiels 1 werden 705 g (5 Mol) Vinylmethyldichlorsilan und 1000 ml Hexan vorgelegt. Der Ablauf der Umsetzung mit 1245 g Benzoesäure (= 10,2 Mol) wird wie unter Beispiel 1 beschrieben durchgeführt; ebenso erfolgt die destillative Aufarbeitung des Rohproduktes. Bei

einem Druck von 0,5 mbar und einer Kopftemperatur von 141 °C werden 1295 g (4,15 Mol) einer farblosen Flüssigkeit abdestilliert. Die Ausbeute beträgt 83 %.

Die Elementaranalyse des Produktes stellt sich wie folgt dar:

| | C | H | Si | Molgewicht |
|---|---|---|---|---|
| berechnet: | 65,4 % | 5,1 % | 9 % | 312 |
| gefunden: | 65,1 % | 5,2 % | 8,8 % | 317 |
| Siedepunkt: | 141 °C/0,5 mbar | | | |
| $d_{25}^{25}$ : | 1,146 | | | |

Beispiel 3

Herstellung von Allyltribenzoyloxysilan

In die Apparatur des Beispiels 1 werden 878 g (5 Mol) Allyltrichlorsilan und 1000 ml Hexan vorgelegt. Der Ablauf der Umsetzung mit 1855 g Benzoesäure (= 15,2 Mol) wird wie unter Beispiel 1 beschrieben durchgeführt; ebenso erfolgt die destillative Aufarbeitung des Rohproduktes. Bei einem Druck von 0,4 mbar und einer Kopftemperatur von 137 °C werden 1599 g (3,7 Mol) einer farblosen Flüssigkeit abdestilliert, die nach Tagen in einen klebrig-kristallinen Zustand übergeht. Die Ausbeute beträgt 74 %.

Die Elementaranalyse des Produktes stellt sich wie folgt dar:

| | C | H | Si | Molgewicht |
|---|---|---|---|---|
| berechnet: | 66,7 % | 4,6 % | 6,5 % | 432 |
| gefunden: | 66,4 % | 4,7 % | 6,3 % | 425 |
| Siedepunkt: | 137 °C/0,4 mbar | | | |

Beispiel 4

Herstellung von Vinylbenzoyloxydimethoxysilan

In die Apparatur des Beispiels 1 werden 2370 g (16 Mol)

Vinyltrimethoxysilan, 2262 g (10 Mol) Benzoesäureanhydrid und 2 g Toluolsulfonsäure vorgelegt.

Die Mischung wird auf ca. 130 °C erwärmt und 40 Stunden bei dieser Temperatur belassen. Nach dieser Zeit wird das Reaktionsprodukt gaschromatographisch auf Anwesenheit von Benzoeanhydrid untersucht. Letzteres war nicht mehr nachweisbar.

Das Umsetzungsprodukt wird daraufhin in eine Destillationsapparatur überführt und im Vakuum aufgearbeitet. Nach Entfernung des im Überschuß angewandten Vinyltrimethoxysilans und des gebildeten Benzoesäuremethylesters werden bei 1,5 mbar und einer Kopftemperatur von 55 °C 1309 g (5,5 Mol) einer farblosen Flüssigkeit abdestilliert. Die Ausbeute, auf Benzoesäureanhydrid bezogen, beträgt 55 %.

Die Elementaranalyse des Produktes stellt sich wie folgt dar:

| | C | H | Si | Molgewicht |
|---|---|---|---|---|
| berechnet: | 55,5 % | 5,9 % | 11,8 % | 238 |
| gefunden: | 55,7 % | 6,1 % | 11,6 % | 244 |

Siedepunkt: 55 °C/1,5 mbar

## Herstellung der Copolymerisate

**Beispiel 5**

Als Reaktionsgefäß dient ein 1000 ml-Dreihalskolben mit Rührer, aufgesetztem Rückflußkühler und $N_2$-Spülung. In den Kolben werden eingebracht: 270 g Ethylhexylacrylat, 80 g Styrol, 40 g N-Vinylpyrrolidon und 10 g Vinyldimethoxymonobenzoyloxysilan sowie 400 ml wasserfreies Ethylacetat. Als letzte Komponente werden 2,0 g Benzoylperoxid zum Gemisch gegeben. Man läßt bei 80 °C unter mildem Rückfluß 24 Stunden polymerisieren, zieht dann das Lösungsmittel im Vakuum einer Wasserstrahlpumpe ab und erhält ein zähviskoses, bei Raumtemperatur noch gießfähiges polymeres Produkt. Es wird unter Feuchtigkeitsausschluß aufbewahrt.

Beispiel 6

Die Arbeitsweise des Beispiels 5 wurde wiederholt mit dem Unterschied, daß anstelle von Vinyl-dimethoxy-monobenzoyloxysilan 10 g Vinyl-dibenzoyloxy-monomethoxysilan eingesetzt wurde. Nach 24 Stunden Reaktionszeit resultierte nach Abzug des Lösungsmittels ein bei Raumtemperatur zähes, transparentes Öl.

Beispiel 7

Nach der Arbeitsweise des Beispiels 5 wurden 220 Ethylhexylacrylat, 40 g Styrol, 30 g N-Vinylmethylacetamid und 10 g Vinyldimethoxymonobenzoyloxysilan mit 1,5 g Benzoylperoxid als Katalysator polymerisiert. Als Lösungsmittel wurden 300 ml Ethylacetat eingesetzt. Die Polymerisationszeit betrug 24 Stunden. Nach Abziehen des Lösungsmittels verblieb ein zähflüssiges, bei Raumtemperatur noch gießfähiges Polymeres.

Beispiel 8

Nach der Arbeitsweise des Beispiels 5 wurden polymerisiert 140 g Ethylhexylacrylat, 20 g N-Vinylmethylacetamid, 30 g Styrol und 10 g Vinyltribenzoyloxysilan. Als Lösungsmittel dienten 150 ml wasserfreies Toluol, als Katalysator wurden 1,0 g Benzoylperoxid eingesetzt. Man ließ 24 Stunden bei 80 °C polymerisieren. Nach Abzug des Lösungsmittels erhielt man ein transparentes, zähflüssiges Polymeres.

Beispiel 9

In der in Beispiel 5 beschriebenen Apparatur wurden in 85 ml wasserfreiem Ethylacetat aufgenommen: 135 g Ethylhexylacrylat, 43,65 g Styrol, 20 g N-Vinylpyrrolidon und 1,4 g Vinyldimethoxymonobenzoyloxysilan. Als Katalysator

dienten 0,6 g Benzoylperoxid; die Polymerisationszeit betrug 24 Stunden bei 80 °C. Nach Abziehen des Lösungsmittels im Vakuum einer Wasserstrahlpumpe resultiert ein sehr zähflüssiges, transparentes Polymeres mit einem Molgewicht $\bar{M}$ von 260 000.

Beispiel 10

Polymerisation mit Einsatz eines Reglers

In einer wie unter Beispiel 4 beschriebenen Apparatur wurden polymerisiert: 135 g Ethylhexylacrylat, 40 g Styrol, 20 g N-Vinylpyrrolidon und 5 g Vinyldimethoxymonobenzoylsilan in 200 ml wasserfreiem Ethylacetat. Als Katalysator diente 1,0 g Benzoylperoxid, und die Temperatur lag bei 80 °C. Nach 4,5 Stunden wurde die Polymerisation durch Zusatz von 4,0 g Dodecylmercaptan abgebrochen. Das Lösungsmittel wurde im schwachen Vakuum abgezogen. Es wurde ein transparent-farbloses, dünnflüssiges Polymeres mit einem Molgewicht $\bar{M}$ von 112 000 erhalten.

Haftkleberbeispiel

Allgemeines

Das in Beispiel 9 beschriebene Copolymere wurde mit 0,5 Gew.-%, bezogen auf die Gesamtmasse. Dodecylbenzolsulfonsäure als Vernetzungskatalysator versetzt und homogenisiert.

Die so erhaltene Haftkleberzubereitung wurde unvernetzt mit Hilfe eines Print-Coaters bei Temperaturen von 70 °C auf eine Polyesterfolie von 36 µm Dicke aufgebracht. Die Schichtdicke der Beschichtung betrug ebenfalls 36 µm. Darauf wurde die Beschichtung 45 sec lang mit IR-Strahlung bestrahlt und anschließend mit Siliconpapier abgedeckt. Nach etwa 30 Minuten wurden nach folgenden Methoden verklebt und geprüft.

Prüf-Verfahren

a) Schälfestigkeit

Ein nach obiger Vorschrift beschichteter Klebestreifen wird mit einer Fläche von 50 x 25 mm auf ein staubfreies, entfettetes und trockenes Eisenblech gelegt und mit einer 2-kg-Hartgummiwalze angedrückt. Das senkrecht gehängte Blech wird 10 Minuten bei 23 °C und 60 % Luftfeuchtigkeit gehalten, dann wird die Probe im Winkel von 180° mit 500 g belastet und die Zeit gemessen, die zum Abschälen der 50 mm erforderlich ist.

b) Scherstandfestigkeit

Ein mit Haftkleber beschichtetes Folienstück wird auf einer Fläche von 25 x 25 mm auf ein trockenes, sauberes, fettfreies Fe-Blech geklebt und mit einer 2 kg-Hartgummiwalze ohne weiteren Druck angepreßt. Nach 10 Minuten Standzeit belastet man die Folie mit einem 1000 g Gewicht und mißt die Zeit, bis das Gewicht abfällt.

Die Schälfestigkeit betrug nach dieser sehr kurzen Zeitspanne bereits 5 Minuten und die Scherstandfestigkeit lag bei 4 Minuten.

- für alle Bestimmungsländer außer Österreich -

0148398



Troisdorf, den 19.12.1983
OZ:83079 (4282) Dr.Sk/Ce

Patentansprüche:

1. Alkenylacyloxysilane der Formel

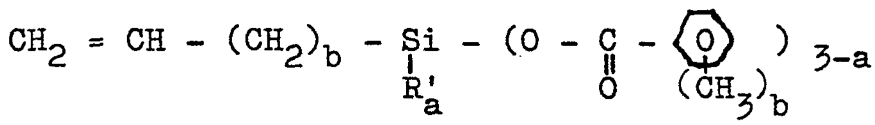

in der R' für gleiche oder verschiedene Reste aus der Gruppe $C_{1-4}$-Alkyl- oder $C_{1-4}$-Alkoxy stehen kann, b = 0 oder 1 und a gleich 0 oder 1 oder 2 sein können.

2. Verfahren zur Herstellung von Alkenylacyloxysilanen gemäß Anspruch 1, dadurch gekennzeichnet, daß man Vinyl- oder Allylmethoxysilane mit, gegebenenfalls im Kern durch Methylgruppen substituiertem, Benzoesäureanhydrid umsetzt.

3. Verwendung von Alkenylacyloxysilanen gemäß Anspruch 1 als Comonomere in Haftklebern auf Basis von Copolymeren mindestens zweier ethylenisch ungesättigter Verbindungen.

Troisdorf, den 07.11.1984
OZ 83079 Dr.Sk/br.

## Patentansprüche

1. Verfahren zur Herstellung von Alkenylacyloxysilanen der Formel

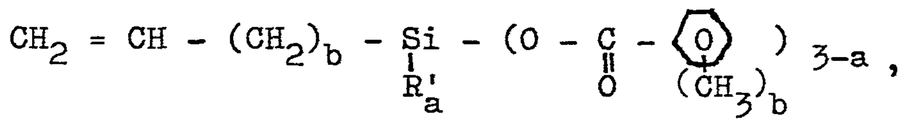

in der R' für gleiche oder verschiedene Reste aus der Gruppe $C_{1-4}$-Alkyl- oder $C_{1-4}$-Alkoxy stehen kann, b = 0 oder 1 und a gleich 0 oder 1 oder 2 sein können, d a d u r c h g e k e n n z e i c h n e t , daß man entweder

a) Vinyl- oder Allylmethoxysilane mit, gegebenenfalls im Kern durch Methylgruppen substituiertem, Benzoesäureanhydrid umsetzt oder

b) Alkenylhalogensilane mit, gegebenenfalls im Kern durch Methylgruppen substituierter, Benzoesäure umsetzt.

2. Verwendung von Alkenylacyloxysilanen gemäß Anspruch 1 als Comonomere in Haftklebern auf Basis von Copolymeren mindestens zweier ethylenisch ungesättigter Verbindungen.